# EUROPÄISCHE PATENTSCHRIFT

(11) **EP 0 827 922 B1**
(45) Veröffentlichungstag und Bekanntmachung des Hinweises auf die Patenterteilung: **12.03.2003**
(21) Anmeldenummer: 97250248.8
(22) Anmeldetag: 25.08.1997
(51) Int. Cl.: B65G 17/24, B23Q 7/14

(54) **Kettenförderer**
Chain conveyor
Transporteur à chaînes

(30) Priorität: 05.09.1996 DE 19637683
(43) Veröffentlichungstag der Anmeldung: 11.03.1998
(73) Patentinhaber: Siemens Aktiengesellschaft, 80333 München (DE)
(72) Erfinder: Schmidt, Heinz, 70567 Stuttgart (DE)

(56) Entgegenhaltungen:
- EP-A- 0 088 042
- DE-A- 2 414 265
- DE-A- 2 702 724
- DE-U- 29 622 763
- FR-A- 1 445 604
- GB-A- 327 476
- GB-A- 2 133 761

## Beschreibung

Die Erfindung betrifft einen Kettenförderer für Transportgut, insbesondere einen Staurollenförderer für Werkstückträger gemäß dem Oberbegriff des Anspruchs 1.

Aus der DE 34 32 042 A1 ist ein Fördersystem mit zwei parallel zueinander und voneinander beabstandeten sowie in Förderrichtung verlaufenden Staurollenketten bekannt, die jeweils zwischen über an den Enden des Fördersystems angeordneten Umlenkrädem endlos umlaufen. Die Staurollenketten weisen zur Aufnahme des Stückgutes Tragstücke auf, die als Staurollen ausgebildet sind und in Richtung des Transportguts zur Abstützung desselben über die Ketten hinausragen. Die Staurollen sind auf den Bolzen der Ketten, über die die Laschen der Ketten untereinander verbunden werden, und zwischen diesen Laschen gelagert. Die Kettenteilung ist so gewählt, dass die Staurollen frei drehbar sind, um diese Staurollenkette für den sog. Trenn- und Staueffekt des Fördersystems einsetzen zu können, d.h. das Transportgut kann von außen über Anschläge angehalten werden, wobei die Staurollenkette weiterläuft und die Staurollen unter dem ruhenden Transportgut abrollen. Zum Wiederanfahren des Transportgutes und dessen Weitertransport sind die Staurollen leicht gebremst gelagert und können daher nach Lösen des Anschlages das Transportgut mitnehmen. Die Ketten sind jeweils über Laufrollen auf zwischen den Umlenkrädern angeordneten Tragelementen in Form von Schienen abgestützt. Die Laufrollen sind jeweils auf den Bolzen der Kette gelagert, die hierfür beidseitig über die Laschen hinaus verlängert sind. Die Kette ist als Seitenbogenkette ausgebildet, so dass bei im wesentlichen in der horizontalen Ebene verlaufenden Fördersystemen die Kette auch kurvenförmig in dieser Ebene geführt werden kann. Hierzu ist in entsprechender Weise das Tragelement für die Kette bei Bedarf bogenförmig ausgebildet. Zumindest in den bogenförmigen Bereichen des Tragelements ist die Kette zusätzlich seitlich geführt. Hierfür sind die Laschen der Ketten in die von dem Transportgut abgewandte Richtung nach unten verlängert und werden jeweils an den Außenseiten über Rollkörper nach Art eines Kugellagers an den inneren Führungsflächen der Schiene geführt.

Diese Art der Kettenführung erweist sich als nachteilig, da in konstruktiv aufwendiger Weise die Laschen der Ketten verlängert werden müssen, um eine Führungsfläche zur Verfügung stellen zu können. Außerdem ist eine aufwendige Führung der Rollkörper erforderlich, da diese in Förderrichtung entlang der Schiene abrollen und vom Ende der Schiene wieder an den Beginn der Schiene gefördert werden müssen.

Des weiteren ist in der EP 0 678 463 A2 ein weiterer Kettenförderer beschrieben, der zur Förderung von Autokarosserie-Transportschlitten durch eine Lackieranlage dient. Diese Ketten stimmen im Aufbau weitgehend mit den vorbeschriebenen überein. Es sind jedoch keine Staurollen an der Kette vorgesehen, sondern feststehend mit der Kette verbundene Tragstücke, auf denen der Transportschlitten ruht. Zur seitlichen Führung der Kette in dem Tragelement sind die Enden der Kettenbolzen, die über die Tragrollen seitlich herausragen, jeweils mit Kunststoffkappen versehen, die von der inneren Wand des als Schiene ausgebildeten Tragelements geführt werden. Zur Führung der Kette können auch Kunststoffelemente an den Seiten der Kettenlaschen vorgesehen werden.

Für eine Vielzahl von Anwendungsfällen erweist sich diese Art der Führung über Kunststoffelemente als ausreichend. Diese Elemente sind jedoch durch den gleitenden und reibenden Kontakt mit der inneren Wand der Schiene einem Verschleiß ausgesetzt und müssen daher bei Bedarf erneuert werden. Darüber hinaus kann diese Form der Führung auch zu einer störenden Geräuschentwicklung des Fördersystems führen.

Femer ist aus der japanischen Patentanmeldung JP 60-148810 A, siehe Patent Abstracts of Japan, Section M, Volume 9, Nr. 313 ein weiterer Staurollenkettenförderer bekannt, dessen Laufrollen der Staurollenkette mit Spurkränzen versehen sind, um diese an den Tragelementen zu führen. Die beiden Laufrollen sind jedoch mit der Staurolle aneinander angrenzend auf einem Bolzen der Kette sowie innerhalb der Kettenlaschen gelagert, so dass über die Reibung zwischen den Tragrollen und den Staurollen der Freilauf der Staurolle beeinflusst wird, insbesondere wenn durch Führungskräfte die Tragrolle in Richtung der Staurolle bewegt wird. Dieser bremsende Einfluss auf die Staurollen ist für eine Vielzahl von Einsatzfällen nicht gewünscht.

Auch ist bereits aus der deutschen Offenlegungsschrift DE 43 41 055 A1 ein weiterer kurvengängiger Staurollenkettenförderer bekannt, dessen Staurolle nicht direkt über die Tragrollen in einem Tragelement abgetragen wird, sondern über auf dem Tragelement angeordnete schienenförmige Einlegeteile.

Der vorliegenden Erfindung liegt die Aufgabe zugrunde, einen Kettenförderer zu schaffen, der einen verschleißarmen Lauf der Kette in dem Tragelement bei gleichzeitig geräuscharmen Lauf ermöglicht.

Diese Aufgabe wird bei einem Kettenförderer durch die im Anspruch 1 aufgeführten Merkmale gelöst. Vorteilhafte Ausgestaltungen der Erfindung sind in den Unteransprüchen 2 bis 6 angegeben.

Erfindungsgemäß wird durch die seitliche Führung der Laufrollen der Kette des Förderers in dem Tragelement erreicht, dass über die somit vorhandene Rollreibung eine verschleiß- und somit wartungsarme sowie gleichzeitig konstruktiv einfache Führung der Kette erzielt wird. Darüber hinaus wird durch diese Führung der Kette auch das Ausmaß von Lärmentwicklungen herabgesetzt. Gegenüber eine gleitend geführten Kette entfällt der Nachteil einer erforderlichen seitlichen Schmierung der Kette, die einen erhöhten Wartungsaufwand bedeutet. Als konstruktiv besonders einfache Lösung erweisen sich die Führung der Laufrollen an der der Kette abgewandten Seite über Führungsflächen, die als der Lauffläche der Laufrolle benachbarte und radial umlaufende Abschrägung ausgebildet sind. Als vorteilhaft hat sich zwischen der abgeschrägten Führungsfläche und der Lauffläche der Laufrolle ein Winkel von etwa 45° erwiesen. Außerdem wird durch die Abschrägung gegenüber einem Spurkranz eine geringe Bauhöhe der Laufrolle erreicht.

Insbesondere im Zusammenhang mit einem als Alustrangpreßprofil ausgebildeten Tragelement hat sich die indirekte Abtragung der Lasten des Transportgutes von den Rollen auf das Tragelement über dazwischen angeordnete Einlegeelemente herausgestellt. Als konstruktiv besonders einfache Lösung hat sich die Verwendung von Rundstäben erwiesen, wobei ein Rundstab in einer entsprechenden Anordnung der Tragschiene angeordnet als Fahrschiene dient und ein weiterer hierzu seitlich und nach oben versetzter Rundstab in einer Funktion als Führungsschiene die Laufrolle an der seitlichen Abschrägung führt. Als Material für die in Form von Rundstäben ausgebildeten Fahr- und Führungsschienen hat sich als vorteilhaft blankgezogener hochfester Stahl aus einer Chrom-Nickel-Legierung herausgestellt, da hierüber eine gute Verteilung der von den Laufrollen aufgebrachten Punktlasten in Richtung des Tragelementes, auf dem der Rundstahl linienförmig aufliegt, gewährleistet ist.

Als weitere Möglichkeit der Ausbildung der Einlegeteile und insbesondere für die Lagerung des lastfreien Untertrums der Kette hat sich die Ausbildung als Formteile, insbesondere aus Polyäthylen, herausgestellt. Diese Formteile weisen zur Führung der Laufrollen an ihren Abschrägungen Führungsteile in Form von nach oben ragenden Vorsprüngen auf.

Eine besonders spielarme und klemmungsfreie Führung der Kette ist dadurch gewährleistet, dass der Abstand der Führungsschienen bzw. der Führungsteile so gewählt ist, dass die Laufrollen mit einem geringen Spiel geführt werden.

In vorteilhafter Weise sind die Tragrollen beidseitig über die Kettenlaschen hinaus verlängerten Bolzen der Kette gelagert, wodurch die Führung und Abtragung der Staurollenkette getrennt von der Abstützung der Last über die zwischen den Kettenlaschen angeordnete und vorzugsweise als Tragrolle ausgebildeten Tragstücken erfolgt. Hierdurch ist gewährleistet, dass es nicht zu Zwängungen zwischen den Tragrollen und den Staurollen kommt und ein Freilauf der Staurolle gewährleistet ist.

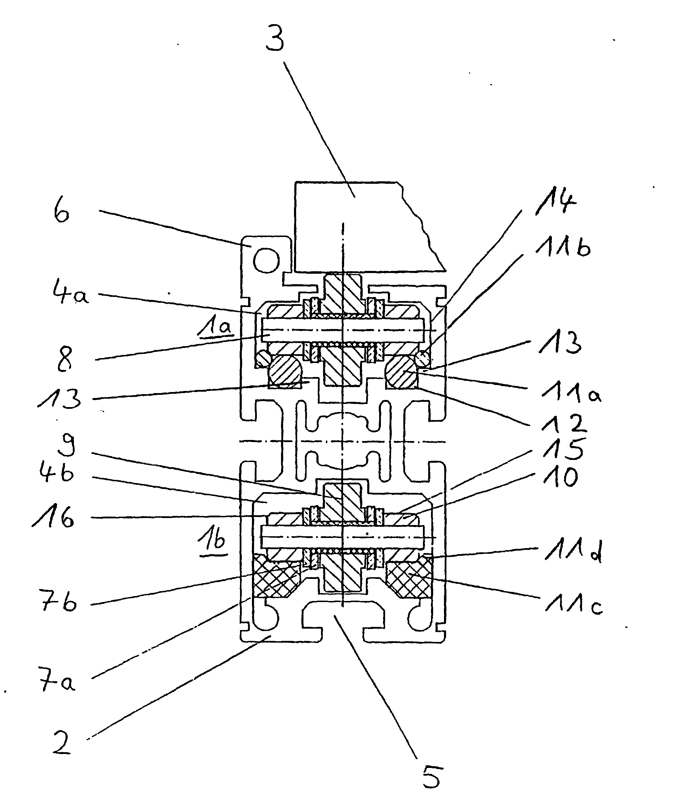

Die Erfindung wird nachfolgend anhand von einem in einer einzigen Figur dargestellten Ausführungsbeispiel näher beschrieben. Der grundsätzliche Aufbau des Kettenförderers ist der vorliegenden Figur nicht zu entnehmen und wird daher zum besseren Verständnis der Erfindung nachfolgend kurz beschrieben.

Der Kettenförderer besteht im wesentlichen aus zwei parallel und voneinander beabstandet geführten sowie in Förderrichtung verlaufenden Ketten 1, die jeweils endlos umlaufend ausgebildet sind und hierzu am jeweiligen Ende des Kettenförderers um ein Umlenkrad geführt sind. Zwischen den Umlenkrädem einer Kette 1 sind jeweils Tragelemente 2 angeordnet, die die Kette 1 und das darauf im wesentlichen in Horizontalrichtung geförderte Transportgut 3 abstützen, wie zum Beispiel Werkstückträger, auf denen Produkte während des Herstellungsvorganges zwischen den einzelnen Montagestationen transportiert werden.

Die einzige Figur zeigt einen Querschnitt durch den linken der beiden vorbeschriebenen Tragelemente 2 des Kettenförderers. Das Tragelement 2 ist als Aluminium-Strangpreßprofil ausgebildet, das im wesentlichen aus zwei übereinander angeordneten Hohlräumen 4a und 4b zur Aufnahme des Obertrums 1a und Untertrums 1b der Kette 1, mehreren in Längsrichtung des Tragelements 2 verlaufenden Nuten 5 zur Aufnahme von nicht dargestellten Nutensteinen für die Befestigung des Tragelements 2 oder von weiteren Bauteilen hieran und einem an der Oberseite des Tragelements 2 angeordneten und nach oben ragenden Vorsprung 6 zur seitlichen Führung des auf der Kette 1 geförderten Transportguts 3.

Die Kette 1 besteht im wesentlichen aus inneren und äußeren Laschen 7a und 7b, die jeweils über Bolzen 8 mit der in Förderrichtung benachbarten Lasche 7a bzw. 7b gelenkig verbunden sind. Auf jedem Bolzen 8 und zwischen den inneren Laschen 7a sind Staurollen 9 drehbar gelagert, auf denen das Transportgut 3 gefördert wird. Mit einer derartig ausgebildeten Kette 1 ist eine Förderung des Transportguts 3 nach dem eingangs beschriebenen Trenn- und Staueffekt möglich. Außerdem sind die Bolzen 8 seitlich über die äußeren Laschen 7b hinaus und somit quer zur Förderrichtung verlängert ausgebildet, um hierauf die Laufrollen 10 zu lagern, über die die Kette 1 in den Hohlräumen 4a und 4b des Tragelements 2 abgestützt sind. Hierdurch ist eine Einleitung der für die Förderung der Tragelemente 2 erforderlichen Stützkräfte über die Staurolle 9, den Bolzen 8 und die Laufrollen 10 in das Tragelement 2 möglich.

Die Lauffläche des Tragelements 2 ist als sich in Förderrichtung erstreckendes Einlegeelement 11 ausgebildet. Hierzu sind die Hohlräume 4a und 4b des Tragelementes 2 mit in Längsrichtung des Tragelements 2 verlaufenden Aussparungen 12 versehen, die bei in die Hohlräume 4a und 4b eingeführter Kette 1 und bei aufrechtstehendem Tragelement 2 gesehen im Bereich unterhalb der Laufrollen 10 angeordnet sind.

Im Bereich des oberen Hohlraums 4a für das Obertrum 1a der Kette 1 ist die Aussparung 12 für jede Laufrolle 10 jeweils zweiteilig ausgebildet, da hier auch das Einlegeelement 11 in eine Fahrschiene 11a und eine Führungsschiene 11b aufgeteilt ist. Die Aussparung 12 für die Fahrschiene 11a weist einen rechteckigen und nach oben offenen Querschnitt auf, in die die Fahrschiene 11a, die vorzugsweise als hochfester blankgezogener Rund-Stahl aus einer Chrom-Nickel-Legierung besteht, eingelegt ist. Die die Aussparung 12 in Förderrichtung gesehen seitlich begrenzenden Schultern 13 des Tragelements 2 weisen auf der der Laufrolle 10 zugewandten Seite eine Höhe etwa von 1/3 des Durchmessers der Fahrschiene 11a sowie auf der gegenüberliegenden Seite eine Höhe von etwa 2/3 des Durchmessers der Fahrschiene 11a auf. Auf dieser höheren Schulter 13 ist die ebenfalls als hochfester blankgezogener Rund-Stahl aus einer Chrom-Nickel-Legierung gebildete Führungsschiene 11b eingelegt, die sich somit nach unten auf die Schulter 13 nach innen in Richtung der Laufrolle 10 auf der Fahrschiene 11a und auf der von der Laufrolle 10 abgewandten Seite auf der Innenseite 14 des Hohlraums 4a abstützt.

Die Abmessungen des aus der Fahrschiene 11a und der Führungsschiene 11b gebildeten Einlegeelements 11, der Aussparungen 12 in dem Tragelement 2 mit ihren Schultern 13 und der die Schultern begrenzenden Innenseite des Hohlraums 4a ist so gewählt, dass die Fahrschiene 11a und die angrenzende Führungsschiene 11b eine Schiene bilden, die die Laufrolle 10 auch zusätzlich auf der der Staurolle 9 abgewandten Außenseite über die Führungsschiene 11b führt. Hierzu ragt die Führungsschiene 11b über das Niveau der Fahrschiene 11 nach oben in Richtung der Laufrolle 10 hinaus. Der Durchmesser der Führungsschiene 11b und der Betrag, um den den Führungsschiene 11b über die Fahrschiene 11a hinausragt, ist so bemessen, dass die Tangenten, die durch die Berührungspunkte zwischen der Fahrschiene 11a und der Führungsschiene 11b und der Laufrolle 10 verlaufen, einen Winkel von etwa 45° einschließen. Entsprechenderweise ist die Laufrolle 10 mit einer ebenen Lauffläche 15 versehen, die auf der der Staurolle 9 abgewandten äußeren Seite und auf der der Kette 1 abgewandten Seite mit einer konischen Abschrägung 16 versehen ist, die ca. in einem Winkel von 45° zu der Lauffläche 15 angeordnet ist.

Der Abstand zwischen den beiden äußeren Führungsschienen 1b ist so gewählt, dass zwischen den Abschrägungen 16 der Laufrollen 10 und den Führungsschienen 1b ein geringer Spalt von etwa 0,5 mm verbleibt, um die Kette 1 klemmungsfrei und spielarm zu führen.

Die Einlegelemente 11 für das rücklaufende Untertrum 1b der Kette 1, die durch den unteren Hohlraum 4b des Tragelements 2 geführt ist, können von den Einlegeelementen 11 für das Obertrum 1a abweichend ausgebildet sein, da hier über das Untertrum 11b keine Lasten abgetragen werden müssen. Hier sind die Einlegeelemente 11 als Formelemente 11c ausgebildet, die vorzugsweise aus Polyäthylen in Form von Leisten hergestellt sind. Die Kunststoffleisten 11c sind in komplementäre Aussparungen des Hohlraums 4b eingelegt und weisen auf der den Laufrollen 10 zugewandten Seite eine der Kontur der Laufrolle 10 angepaßte Lauffläche 15 auf, die entsprechend der drahtförmigen Führungsschiene 11b ein Führungsteil 11d aufweist, das die Laufrolle 10 an ihrer Abschrägung 16 führt.

Je nach Einsatzfall des Kettenförderers, insbesondere in bezug auf den Betrag der abzutragenden Last, ist es auch möglich, die Einlegeelemente 11 für das Obertrum 1a als Kunststoffelemente 11c mit Führungsteilen 11d auszuführen. Auch ist es möglich, die Kette 1 als Seitenbogenkette auszuführen, wodurch ein kurvenförmiger Verlauf des Kettenförderers in horizontaler Ebene möglich ist. Die hierbei erforderliche Seitenführung der Kette 1 erfolgt hierbei über die erfindungsgemäß ausgebildeten Laufrollen 11, die hierfür besonders geeignet sind.

## Patentansprüche

1. Kettenförderer für Transportgut, insbesondere Staurollenförderer für Werkstückträger mit mindestens einer endlos über Umlenkräder geführten Kette, mit zwischen den Umlenkrädern angeordneten und in Förderrichtung verlaufenden Tragelementen zur Abstützung der Kette über Laufrollen, die an beidseitig über die Kette hinaus verlängerten Bolzen der Kette gelagert sind, und mit an den Ketten befestigten und über die Ketten in Richtung des stückgutes hinausragenden Tragstücken zur Aufnahme des Transportgut,
**dadurch gekennzeichnet,**
**daß** die Laufrollen (10) seitlich in dem Tragelement (2) über in dem Tragelement (2) angeordnete Einlegeteile (11) geführt sind und die Laufrollen (10) an der der Kette (1) abgewandten Seite jeweils eine Führungsfläche (Abschrägung 16) aufweisen, die als der Lauffläche (15) der Laufrolle (10) benachbarte und konische Abschrägung (16) ausgebildet ist,

2. Kettenförderer nach Anspruch 1,
**dadurch gekennzeichnet,**
**daß** der zwischen der Führungsfläche (Abschrägung 16) und der Lauffläche (10) eingeschlossene Winkel etwa 45° beträgt.

3. Kettenförderer nach Anspruch 1,
**dadurch gekennzeichnet,**
**daß** die Einlegeteile (11) je Laufrolle (10) in eine Fahrschiene (11a) und eine Führungsschiene (11b) aufgeteilt sind, die stabförmig ausgebildet sind und derart in Aussparungen (12) des Tragelements (2) angeordnet sind, daß die Laufrollen (10) mit jeweils ihrer Lauffläche (15) auf den Fahrschienen (11a) und mit ihren Führungsflächen (Abschrägung 16) an der Führungsschiene (11b) abrollen.

4. Kettenförderer nach Anspruch 1,
**dadurch gekennzeichnet,**
**daß** die Einlegeteile (11) als Formelemente (11c) ausgebildet sind, die einen Führungsteil (11d) aufweisen, auf dem die Führungsfläche (Abschrägung 16) der Laufrolle (10) abrollt.

5. Kettenförderer nach Anspruch 3 oder 4,
**dadurch gekennzeichnet,**
**daß** der Abstand zwischen den Führungsschienen (11b) bzw. Führungsteilen (11d) in Abhängigkeit von dem Abstand der Führungsflächen (Abschrägung 16) der gegenüberliegenden Laufrollen (10) so gewählt ist, daß die Laufrollen (10) spielarm führbar sind.

6. Kettenförderer nach den Ansprüchen 1 - 5,
**dadurch gekennzeichnet,**
**daß** die Bolzen (8) beidseitig über die Kette (1) für die Lagerung der Laufrollen (10) verlängert sind.

## Claims

1. Chain conveyor for transportable articles, in particular accumulating roller conveyor for workpiece carriers, having at least one chain which is guided in an endless manner over deflecting wheels, having carrying elements which are arranged between the deflecting wheels, run in the conveying direction and are intended for supporting the chain via running rollers, which are mounted on pins of the chain which are extended on both sides beyond the chain, and having carrying members which are fastened on the chains, project beyond the chains in the direction of the piece goods and are intended for accommodating the transportable articles, **characterized in that** the running rollers (10) are guided laterally in the carrying element (2) via insert parts (11) arranged in the carrying element (2) and, on the side which is directed away from the chain (1), the running rollers (10) each have a guide surface (bevel 16) which is designed as a conical bevel (16) adjacent to the running surface (15) of the running roller (10).

2. Chain conveyor according to Claim 1, **characterized in that** the angle enclosed between the guide surface (bevel 16) and the running surface (15) is approximately 45°.

3. Chain conveyor according to Claim 1, **characterized in that** the insert parts (11) for each guide roller (10) are divided up into a running rail (11a) and a guide rail (11b), which are of rod-like design and are arranged in recesses (12) of the carrying element (2) such that the running rollers (10) have their running surface (15) in each case rolling on the running rails (11a) and their guide surfaces (bevel 16) rolling on the guide rail (11b).

4. Chain conveyor according to Claim 1, **characterized in that** the insert parts (11) are designed as shaped elements (11c) which have a guide part (11d) on which the guide surface (bevel 16) of the running roller (10) rolls.

5. Chain conveyor according to Claims 3 or 4, **characterized in that** the distance between the guide rails (11b) and guide parts (11d) is selected, in dependence on the distance between the guide surfaces (bevel 16) of the mutually opposite running rollers (10), such that the running rollers (10) can be guided with a low level of play.

6. Chain conveyor according to Claims 1-5, **characterized in that** the pins (8) are extended beyond the chain (1) on both sides for the purpose of mounting the running rollers (10).

## Revendications

1. Transporteur à chaînes pour matériel de transport, notamment transporteur d'accumulation à rouleaux pour des porte-pièces, comportant au moins une chaîne sans fin dirigée sur des poulies de renvoi, comportant des éléments de support disposés entre les poulies de renvoi et s'étendant dans la direction de transport afin de soutenir la chaîne par l'intermédiaire de galets de roulement qui sont montés sur des tourillons de la chaîne prolongés de part et d'autre au-delà de la chaîne, et comportant des éléments porteurs fixés sur les chaînes et s'étendant au-delà des chaînes en direction du matériel de transport afin de recevoir ce dernier,
**caractérisé en ce que** les galets (10) de roulement sont guidés latéralement dans l'élément (2) de support par l'intermédiaire d'éléments (11) rapportés disposés dans l'élément (2) de support, et les galets (10) de roulement comportent chacun, sur le côté opposé à la chaîne (1), une surface de guidage (chanfreinage 16) qui est réalisée sous la forme d'un chanfreinage (16) conique voisin de la surface (15) de roulement du galet (10) de roulement.

2. Transporteur à chaînes suivant la revendication 1, **caractérisé en ce que** l'angle compris entre la surface de guidage (chanfreinage 16) et la surface (15) de roulement est égal à environ 45°.

3. Transporteur à chaînes suivant la revendication 1, **caractérisé en ce que** les éléments (11) rapportés sont divisés, pour chaque galet (10) de roulement, en un rail (11a) de roulement et un rail (11b) de guidage, qui sont réalisés en forme de barres et sont disposés dans des évidements (12) de l'élément (2) de support de telle sorte que les galets (10) de roulement roulent respectivement par leur surface (15) de roulement sur les rails (11a) de roulement et par leurs surfaces de guidage (chanfreinage 16) sur le rail (11b) de guidage.

4. Transporteur à chaînes suivant la revendication 1, **caractérisé en ce que** les éléments (11) rapportés sont réalisés sous forme de pièces (11c) moulées qui comportent une partie (11d) de guidage sur laquelle roule la surface de guidage (chanfreinage 16) du galet (10) de roulement.

5. Transporteur à chaînes suivant la revendication 3 ou 4, **caractérisé en ce que** l'écartement des rails (11b) de guidage ou respectivement des parties (11d) de guidage est choisi, en fonction de l'écartement des surfaces de guidage (chanfreinage 16) des galets (10) de roulement qui leur font face, de telle sorte que les galets (10) de roulement peuvent être guidés avec un faible jeu.

6. Transporteur à chaînes suivant l'une des revendications 1 à 5, **caractérisé en ce que** les tourillons (8) sont prolongés de part et d'autre de la chaîne (1) pour le montage des galets (10) de roulement.
